# EUROPEAN PATENT SPECIFICATION

(11) **EP 4 181 013 B1**
(45) Date of publication and mention of the grant of the patent: **04.11.2026**
(21) Application number: 20946487.4
(22) Date of filing: 21.07.2020
(51) Int. Cl.: G06V 20/58, G06V 10/82, G06V 10/774, G06N 3/045, G06N 3/08, G06F 18/241, G06V 10/80

(54) **METHOD AND APPARATUS FOR DETERMINING LABELING INFORMATION**
VERFAHREN UND VORRICHTUNG ZUR BESTIMMUNG VON ETIKETTIERUNGSINFORMATIONEN
PROCÉDÉ ET APPAREIL DE DÉTERMINATION D'INFORMATIONS D'ÉTIQUETAGE

(43) Date of publication of application: 17.05.2023
(73) Proprietor: Yinwang Intelligent Technologies Co., Ltd., Shenzhen, Guangdong 518129 (CN)
(72) Inventor: WANG, Xudong, Shenzhen, Guangdong 518129 (CN); LIU, Xinchun, Shenzhen, Guangdong 518129 (CN); JIN, Zhounan, Shenzhen, Guangdong 518129 (CN)
(74) Representative: Pfenning, Meinig & Partner mbB
(86) International application number: PCT/CN2020/103205
(87) International publication number: WO 2022/016355

(56) References cited:
- WO-A1-2020/124360
- CN-A- 108 830 285
- CN-A- 108 875 911
- CN-A- 109 447 034
- CN-A- 109 670 405
- CN-A- 110 427 860
- KR-A- 20180 033 037
- US-A1- 2019 102 656
- SOLOVYEV ROMAN ET AL: "Weighted boxes fusion: Ensembling boxes from different object detection models", IMAGE AND VISION COMPUTING, 29 October 2019 (2019-10-29), pages 1 - 3, XP093060999, Retrieved from the Internet <URL:https://arxiv.org/pdf/1910.13302v1.pdf> [retrieved on 20230705], DOI: 10.1016/j.imavis.2021.104117
- RUTA DYMITR ET AL: "An Overview of Classifier Fusion Methods", COMPUTING AND INFORMATION SYSTEMS, vol. 7, 29 February 2000 (2000-02-29), GB, pages 1 - 10, XP055941773, ISSN: 1352-9404

## Description

### TECHNICAL FIELD

This application relates to the field of automatic driving technologies, and in particular, to a labeling information determining method and apparatus.

### BACKGROUND

In an autonomous driving field, various detected objects such as a vehicle and a pedestrian usually need to be labeled in an image of a driving environment in which a vehicle is located.

In the conventional technology, a detected object is usually labeled in an image by using a rectangular bounding box, that is, the detected object is labeled in the image by using the rectangular bounding box. Specifically, the detected object in the image may be labeled by using a detection model, to obtain labeling information of the detected object, and the detected object is labeled in the image by using the rectangular bounding box based on the labeling information. However, after the detected object in the image is labeled by using an existing detection model, accuracy of the obtained labeling information is relatively low. When the rectangular bounding box used to label the detected object is subsequently determined based on the labeling information, there is a relatively large error between the determined rectangular bounding box and a rectangular bounding box corresponding to an actual location of the detected object.

KR 2018 033037 A describes a method for detecting an object. The method comprises the steps of: receiving an image; detecting an object in the image; determining a primary reliability detection score of the object by a primary object detector; determining a reliability scaling factor of the object by a classification network; and adjusting the primary reliability detection score based on multiplying the primary reliability detection score by the reliability scaling factor. A weighted fusion of boxes is proposed in Solovyev Roman ET AL, "Weighted boxes fusion: Ensembling boxes from different object detection models", Image and Vision Computing, (20191029), pages 1 - 3. RUTA DYMITR ET AL, "An Overview of Classifier Fusion Methods", COMPUTING AND INFORMATION SYSTEMS, GB, (20000229), vol. 7, pages 1 - 10, provides an overview of classifier fusion methods.

### SUMMARY

This application provides a labeling information determining method and apparatus, to resolve relatively low accuracy of labeling information. The invention is carried out according to the appended claims.

According to a first aspect, this application provides a labeling information determining method. The method includes: obtaining a detection model set, where the detection model set includes at least two detection models, and the at least two detection models in the detection model set correspond to a same detection category; and labeling a to-be-labeled image by using the detection model set, to obtain a first labeling information set. The at least two detection models are obtained through training according to different detection algorithms that include: a faster region-based convolutional neural network, Faster-RCNN, a grid region-based convolutional neural network, Grid-RCNN, and a you only look once, YOLO, network.

In this implementation, the detection model set is first obtained. The detection model set includes the at least two detection models, and the at least two detection models in the detection model set correspond to the same detection category. Then, the to-be-labeled image is labeled by using the detection model set, to obtain the first labeling information set. In other words, when labeling information is determined in this implementation, the to-be-labeled image is not labeled by using a single detection model, but labeled by using a plurality of detection models. The plurality of detection models may correspond to a plurality of detection categories, or may correspond to a same detection category. When the plurality of detection models correspond to the plurality of detection categories, a detection model that is friendlier to a detected object of each detection category may be obtained. In this way, detection accuracy is higher, and more accurate labeling information may be obtained. When the plurality of detection models correspond to the same detection category, a plurality of pieces of labeling information may be obtained for a same detected object, and actual labeling information subsequently determined based on the plurality of pieces of labeling information is also more accurate. Therefore, labeling information with higher accuracy may be obtained by using the method in this implementation. When a rectangular bounding box used to label a detected object is subsequently determined based on the labeling information, an error between the obtained rectangular bounding box and a rectangular bounding box corresponding to an actual location is significantly reduced at a pixel level, and can be ignored basically. Therefore, applicability is good.

With reference to the first aspect, in a first possible implementation of the first aspect, the to-be-labeled image includes at least one first detected object; the first labeling information set includes at least one piece of first labeling information; the first labeling information corresponds to labeling information of the first detected object; and the first labeling information includes first location information and first category information; and the method includes: clustering first labeling information of a same category in the first labeling information set, to generate at least one first cluster, where the first cluster corresponds to the first detected object; and generating, based on the at least one piece of first labeling information included in the first cluster, second labeling information of the first detected object corresponding to the first cluster, where the second labeling information includes second location information and second category information.

In this implementation, at least one cluster is obtained by clustering and integrating the first labeling information of a same detection category. For each cluster, second labeling information of a corresponding first detected object may be determined based on first location information and first category information that are included in a plurality of pieces of first labeling information. The obtained second labeling information integrates a plurality of pieces of first location information and first category information. Therefore, accuracy is higher. An error between a rectangular bounding box subsequently generated based on the second labeling information and a rectangular bounding box corresponding to an actual location and an actual category is smaller and basically close to zero error. Therefore, applicability is better.

With reference to the first aspect, in a second possible implementation of the first aspect, the generating, based on the at least one piece of first labeling information included in the first cluster, second labeling information of the first detected object corresponding to the first cluster includes: generating, based on the first location information in the first labeling information included in the first cluster, the second location information of the first detected object corresponding to the first cluster; and generating, based on the first category information in the first labeling information included in the first cluster, the second category information of the first detected object corresponding to the first cluster.

In this implementation, second location information of a corresponding first detected object may be determined based on a plurality of pieces of first location information, and second category information of the corresponding first detected object may be determined based on a plurality of pieces of first category information. For each detected object, second location information corresponding to each detected object integrates the plurality of pieces of first location information, and second category information corresponding to each detected object integrates the plurality of pieces of first category information. Therefore, accuracy is higher.

With reference to the first aspect, in a third possible implementation of the first aspect, the generating, based on the first location information in the first labeling information included in the first cluster, the second location information of the first detected object corresponding to the first cluster includes: performing average value calculation on the first location information in the first labeling information included in the first cluster, to generate the second location information of the first detected object corresponding to the first cluster.

In this implementation, second location information of each first detected object is obtained by performing average value calculation on a plurality of pieces of first location information, so that the location information of the first detected object is more accurate.

With reference to the first aspect, in a fourth possible implementation of the first aspect, the generating, based on the first category information in the first labeling information included in the first cluster, the second category information of the first detected object corresponding to the first cluster includes: determining a first quantity of pieces of the first labeling information included in the first cluster; and if the first quantity is greater than or equal to a preset quantity threshold, determining that the first category information in the first labeling information included in the first cluster is the second category information of the first detected object corresponding to the first cluster.

In this implementation, a quantity of pieces of first labeling information included in each cluster is compared with the preset quantity threshold, to determine whether first category information corresponding to the cluster is accurate. When the quantity of pieces of first labeling information is greater than the preset quantity threshold, it is considered that the first category information is relatively accurate and reliable. The first category information may be determined as second category information of a first detected object corresponding to the cluster, so that the category information of the first detected object is more accurate and reliable, and accuracy is higher.

With reference to the first aspect, in a fifth possible implementation of the first aspect, the generating, based on the first category information in the first labeling information included in the first cluster, the second category information of the first detected object corresponding to the first cluster includes: determining a first quantity of pieces of the first labeling information included in the first cluster; and if the first quantity is less than a preset quantity threshold, obtaining a first classification model associated with the first category information in the first labeling information included in the first cluster, and determining, based on the first classification model and the second location information of the first detected object corresponding to the first cluster, the second category information of the first detected object corresponding to the first cluster.

In this implementation, a quantity of pieces of first labeling information included in each cluster is compared with the preset quantity threshold, to determine whether first category information corresponding to the cluster is accurate. When the quantity of pieces of first labeling information is less than or equal to the preset quantity threshold, it is considered that the first category information corresponding to the cluster is inaccurate. The category information of the first detected object corresponding to the first cluster is re-determined by using a classification model, so that the category information of the first detected object is more accurate and reliable, and accuracy is higher.

With reference to the first aspect, in a sixth possible implementation of the first aspect, the clustering first labeling information of a same category in the first labeling information set, to generate at least one first cluster includes: obtaining an intersection over union of rectangular bounding boxes corresponding to any two pieces of first labeling information of a same category in the first labeling information set, and clustering the first labeling information of a same category in the first labeling information set based on the intersection over union of rectangular bounding boxes, to generate the at least one first cluster.

In this implementation, when the first labeling information of a same category is clustered, an intersection over union of rectangular bounding boxes is used as a distance measure for clustering. In this way, clustering processing has relatively high accuracy and relatively good applicability.

With reference to the first aspect, in a seventh possible implementation of the first aspect, the detection model set is preset.

In this implementation, the detection model set is preset in a terminal device, and the detection model set is directly obtained from the terminal device. Therefore, a process of obtaining the detection model set is simpler.

With reference to the first aspect, in an eighth possible implementation of the first aspect, the method further includes: obtaining a classification model set. The classification model set includes at least two classification models, the at least two classification models in the classification model set correspond to a same detection category, and the at least two classification models include the first classification model.

In this implementation, the classification model set includes the at least two classification models, and the at least two classification models correspond to the same detection category. In other words, the classification model set includes a plurality of classification models, and the plurality of classification models may correspond to a plurality of detection categories, or may correspond to a same detection category. When the classification model set is used to perform classification processing and the plurality of classification models correspond to the plurality of detection categories, a classification model that is friendlier to a detected object of each detection category may be obtained. In this way, accuracy of classification processing is higher, and a more accurate classification result may be obtained. When the plurality of classification models correspond to the same detection category, for a same detected object, a plurality of classification processing results may be obtained, and an actual classification result subsequently determined based on the plurality of classification processing results is also more accurate, and applicability is better.

According to a second aspect, this application provides a labeling information determining apparatus. The apparatus includes: an obtaining module, configured to obtain a detection model set, where the detection model set includes at least two detection models, and the at least two detection models in the detection model set correspond to a same detection category; and a processing module, configured to label a to-be-labeled image by using the detection model set, to obtain a first labeling information set.

The apparatus in this implementation may first obtain the detection model set. The detection model set includes the at least two detection models, and the at least two detection models in the detection model set correspond to the same detection category. Then the apparatus labels the to-be-labeled image by using the detection model set, to obtain the first labeling information set. In other words, when the apparatus is configured to determine the labeling information, the to-be-labeled image is not labeled by using a single detection model, but labeled by using a plurality of detection models. The plurality of detection models may correspond to a plurality of detection categories, or may correspond to a same detection category. When the plurality of detection models correspond to the plurality of detection categories, a detection model that is friendlier to a detected object of each detection category may be obtained. In this way, detection accuracy is higher, and more accurate labeling information may be obtained. When the plurality of detection models correspond to the same detection category, a plurality of pieces of labeling information may be obtained for a same detected object, and actual labeling information subsequently determined based on the plurality of pieces of labeling information is also more accurate. Therefore, labeling information with higher accuracy may be obtained by using the apparatus. When a rectangular bounding box used to label a detected object is subsequently determined based on the labeling information, an error between the obtained rectangular bounding box and a rectangular bounding box corresponding to an actual location is significantly reduced at a pixel level, and can be ignored basically. Therefore, applicability is good.

With reference to the second aspect, in a first possible implementation of the second aspect, the to-be-labeled image includes at least one first detected object. The first labeling information set includes at least one piece of first labeling information. The first labeling information corresponds to labeling information of the first detected object. The first labeling information includes first location information and first category information. The processing module is further configured to: cluster first labeling information of a same category in the first labeling information set, to generate at least one first cluster, where the first cluster corresponds to the first detected object; and generate, based on the at least one piece of first labeling information included in the first cluster, second labeling information of the first detected object corresponding to the first cluster, where the second labeling information includes second location information and second category information.

The apparatus in this implementation may cluster and integrate the first labeling information of a same detection category, to obtain at least one cluster. For each cluster, the apparatus may determine second labeling information of a corresponding first detected object based on first location information and first category information that are included in a plurality of pieces of first labeling information. The obtained second labeling information integrates a plurality of pieces of first location information and first category information. Therefore, accuracy is higher. An error between a rectangular bounding box subsequently generated based on the second labeling information and a rectangular bounding box corresponding to an actual location and an actual category is smaller and basically close to zero error. Therefore, applicability is better.

With reference to the second aspect, in a second possible implementation of the second aspect, the processing module is specifically configured to: generate, based on the first location information in the first labeling information included in the first cluster, the second location information of the first detected object corresponding to the first cluster; and generate, based on the first category information in the first labeling information included in the first cluster, the second category information of the first detected object corresponding to the first cluster.

The apparatus in this implementation may determine second location information of a corresponding first detected object based on a plurality of pieces of first location information, and determine second category information of the corresponding first detected object based on a plurality of pieces of first category information. For each detected object, second location information corresponding to each detected object integrates the plurality of pieces of first location information, and second category information corresponding to each detected object integrates the plurality of pieces of first category information. Therefore, accuracy is higher.

With reference to the second aspect, in a third possible implementation of the second aspect, the processing module is specifically configured to: perform average value calculation on the first location information in the first labeling information included in the first cluster, to generate the second location information of the first detected object corresponding to the first cluster.

Second location information of each first detected object obtained by using the apparatus in this implementation is obtained by performing average value calculation on a plurality of pieces of first location information, so that the location information of the first detected object is more accurate.

With reference to the second aspect, in a fourth possible implementation of the second aspect, the processing module is specifically configured to: determine a first quantity of pieces of the first labeling information included in the first cluster; and if the first quantity is greater than or equal to a preset quantity threshold, determine that the first category information in the first labeling information included in the first cluster is the second category information of the first detected object corresponding to the first cluster.

The apparatus in this implementation may determine, by comparing a quantity of pieces of first labeling information included in each cluster with the preset quantity threshold, whether first category information corresponding to the cluster is accurate. When the quantity of pieces of first labeling information is greater than the preset quantity threshold, it is considered that the first category information is relatively accurate and reliable. The first category information may be determined as second category information of a first detected object corresponding to the cluster, so that the category information of the first detected object is more accurate and reliable, and accuracy is higher.

With reference to the second aspect, in a fifth possible implementation of the second aspect, the processing module is specifically configured to: determine a first quantity of pieces of the first labeling information included in the first cluster; and if the first quantity is less than a preset quantity threshold, obtain a first classification model associated with the first category information in the first labeling information included in the first cluster, and determine, based on the first classification model and the second location information of the first detected object corresponding to the first cluster, the second category information of the first detected object corresponding to the first cluster.

The apparatus in this implementation may determine, by comparing a quantity of pieces of first labeling information included in each cluster with the preset quantity threshold, whether first category information corresponding to the cluster is accurate. When the quantity of pieces of first labeling information is less than or equal to the preset quantity threshold, it is considered that the first category information corresponding to the cluster is inaccurate. The category information of the first detected object corresponding to the first cluster is re-determined by using a classification model, so that the category information of the first detected object is more accurate and reliable, and accuracy is higher.

With reference to the second aspect, in a sixth possible implementation of the second aspect, the processing module is specifically configured to: obtain an intersection over union of rectangular bounding boxes corresponding to any two pieces of first labeling information of a same category in the first labeling information set; and cluster the first labeling information of a same category in the first labeling information set based on the intersection over union of rectangular bounding boxes, to generate the at least one first cluster.

When clustering the first labeling information of a same category, the apparatus in this implementation uses an intersection over union of rectangular bounding boxes as a distance measure for clustering. In this way, clustering processing has relatively high accuracy and relatively good applicability.

With reference to the second aspect, in a seventh possible implementation of the second aspect, the detection model set is preset.

The detection model set is preset in the apparatus in this implementation. When the detection model set is obtained, the detection model set can be directly read. Therefore, a process of obtaining the detection model set is simpler.

With reference to the second aspect, in an eighth possible implementation of the second aspect, the obtaining module is further configured to obtain a classification model set. The classification model set includes at least two classification models, the at least two classification models in the classification model set correspond to a same detection category, and the at least two classification models include the first classification model.

When the apparatus in this implementation is used, the classification model set includes the at least two classification models, and the at least two classification models correspond to the same detection category. In other words, the classification model set includes a plurality of classification models, and the plurality of classification models may correspond to a plurality of detection categories, or may correspond to a same detection category. When the classification model set is used to perform classification processing and the plurality of classification models correspond to the plurality of detection categories, a classification model that is friendlier to a detected object of each detection category may be obtained. In this way, accuracy of classification processing is higher, and a more accurate classification result may be obtained. When the plurality of classification models correspond to the same detection category, for a same detected object, a plurality of classification processing results may be obtained, and an actual classification result subsequently determined based on the plurality of classification processing results is also more accurate, and applicability is better.

According to a third aspect, an embodiment of this application provides an apparatus. The apparatus includes at least one processor, and when the at least one processor executes a computer program or instructions in at least one memory, the method according to the first aspect is performed.

According to a fourth aspect, an embodiment of this application provides an apparatus. The apparatus includes at least one processor and at least one memory. The at least one memory is configured to store a computer program or instructions. The at least one processor is configured to execute the computer program or the instructions stored in the at least one memory, so that the apparatus is enabled to perform the corresponding method according to the first aspect.

According to a fifth aspect, an embodiment of this application provides an apparatus. The apparatus includes at least one processor, at least one memory, and at least one transceiver. The at least one transceiver is configured to receive a signal or send a signal; the at least one memory is configured to store a computer program or instructions; and the at least one processor is configured to invoke the computer program or the instructions from the at least one memory, to perform the method according to the first aspect.

According to a sixth aspect, an embodiment of this application provides an apparatus. The apparatus includes at least one processor and at least one interface circuit. The at least one interface circuit is configured to receive a computer program or instructions, and transmit the computer program or the instructions to the at least one processor; and the at least one processor runs the computer program or the instructions to perform the corresponding method according to the first aspect.

According to a seventh aspect, an embodiment of this application provides a computer storage medium. The computer storage medium is configured to store a computer program or instructions, and when the computer program or the instructions is/are executed, the method according to the first aspect is implemented.

According to an eighth aspect, an embodiment of this application provides a computer program product including a computer program or instructions. When the computer program or the instructions is/are executed, the method according to the first aspect is implemented.

According to a ninth aspect, an embodiment of this application provides a terminal device. The terminal device may be a transportation vehicle or an intelligent device, and includes an uncrewed aerial vehicle, an uncrewed transportation vehicle, an automobile, a robot, or the like. The transportation vehicle or the intelligent device includes the labeling information determining apparatus and/or the apparatus.

To resolve a problem of relatively low accuracy of labeling information, this application provides a labeling information determining method and apparatus. In the method, a detection model set is first obtained. The detection model set includes at least two detection models, and the at least two detection models in the detection model set correspond to a same detection category. Then, a to-be-labeled image is labeled by using the detection model set, to obtain a first labeling information set. In other words, when labeling information is determined by using the method, the to-be-labeled image is not labeled by using a single detection model, but labeled by using a plurality of detection models. The plurality of detection models may correspond to a plurality of detection categories, or may correspond to a same detection category. When the plurality of detection models correspond to the plurality of detection categories, a detection model that is friendlier to a detected object of each detection category may be obtained. In this way, detection accuracy is higher, and more accurate labeling information may be obtained. When the plurality of detection models correspond to the same detection category, a plurality of pieces of labeling information may be obtained for a same detected object, and actual labeling information subsequently determined based on the plurality of pieces of labeling information is also more accurate. Therefore, labeling information with higher accuracy may be obtained by using the method. When a rectangular bounding box used to label a detected object is subsequently determined based on the labeling information, an error between the obtained rectangular bounding box and a rectangular bounding box corresponding to an actual location is significantly reduced at a pixel level, and can be ignored basically. Therefore, applicability is good.

### BRIEF DESCRIPTION OF DRAWINGS

FIG. 1 is a schematic diagram of an application scenario according to this application;
FIG. 2 is a schematic flowchart of an implementation of a labeling information determining method according to this application;
FIG. 3 is a block diagram of a structure of an implementation of a labeling information determining apparatus according to this application, and
FIG. 4 is a block diagram of a structure of an implementation of a chip system according to this application.

### DESCRIPTION OF EMBODIMENTS

The following describes the technical solutions of this application with reference to the accompanying drawings.

In descriptions of this application, unless otherwise specified, "/" means "or". For example, A/B may represent A or B. The term "and/or" in this specification describes only an association relationship for describing associated objects and represents that three relationships may exist. For example, A and/or B may represent the following three cases: Only A exists, both A and B exist, and only B exists. In addition, "at least one" means one or more, and "a plurality of" means two or more. The terms such as "first" and "second" do not limit a quantity and an execution sequence, and the terms such as "first" or "second" do not indicate a definite difference.

It should be noted that, in this application, the word "example", "for example", or the like is used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

To facilitate understanding of the technical solutions of this application, the following first describes an example of an application scenario of the technical solutions provided in this application.

In an autonomous driving field, various detected objects usually need to be labeled in an image of a driving environment in which a vehicle is located. For example, the detected objects may include a car and/or a pedestrian.

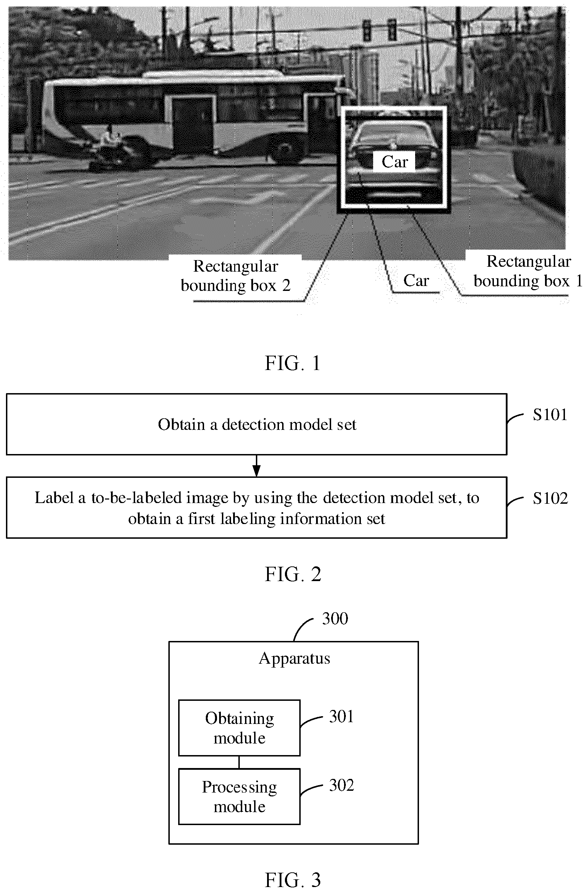

In a commonly used labeling method at present, an image of a driving environment in which a vehicle is located is usually labeled by using a detection model, to obtain labeling information, and then a detected object is labeled in the image by using a rectangular bounding box based on the labeling information. For example, as shown in FIG. 1, a detected object car (car) in an image shown in FIG. 1 is labeled by using a rectangular bounding box.

However, after a detected object in an image is labeled by using an existing detection model, accuracy of the obtained labeling information is relatively low, and there is a relatively large error between a rectangular bounding box displayed in the image and a rectangular bounding box corresponding to an actual location of the detected object. In some application scenarios, the error may be as high as dozens of pixels, resulting in poor applicability.

For example, in the image shown in FIG. 1, a rectangular bounding box 1 is a rectangular bounding box determined based on labeling information, and a rectangular bounding box 2 is a rectangular bounding box corresponding to an actual location of the car. As shown in FIG. 1, there is a relatively large error between the rectangular bounding box 1 and the rectangular bounding box 2.

To resolve the foregoing technical problem, embodiments of this application provide the following technical solutions. For specific content of the technical solutions, refer to the following descriptions.

The technical solutions in this application may be applied to a terminal device. The terminal device in this application may be stationary or mobile. The terminal device may be a device that includes a communication terminal, a vehicle-mounted device, a mobile device, a user terminal, a wireless communication device, a portable terminal, a user agent, a service device, user equipment (user equipment, UE), or the like, that is at the outermost periphery of a network in the computer network, and that is mainly configured to input data and output or display a processing result, or may be a software client, an application, or the like installed or running on any one of the foregoing devices. For example, the terminal device may be a tablet device, a handheld device having a wireless communication function, a computing device, an uncrewed aerial vehicle, an uncrewed transportation vehicle, an in-vehicle communication module, or the like.

The following describes an embodiment of a labeling information determining method provided in this application.

FIG. 2 is a schematic flowchart of an implementation of a labeling information determining method according to this application. The method may include the following steps.

Step S101: Obtain a detection model set.

The detection model set includes at least two detection models, and the at least two detection models in the detection model set correspond to a same detection category.

Before a detected object in a to-be-labeled image is labeled, detected objects that need to be labeled may be classified into one or more detection categories. For example, the detection category may include at least one of the following: a pedestrian (pedestrian), a car (car), a tram (tram), and a motorcycle (motorcycle). Alternatively, the detection category may be another category. This is not limited herein.

In the invention, the detection models included in the detection model set are generated through model training. For example,
when a detected object of only one detection category needs to be labeled, for the detection category, at least two detection models with different detection effects are generated through training. In the invention, the at least two detection models with different detection effects are obtained through training according to different detection algorithms. In other words, one detection model corresponds to one detection algorithm, and different detection models correspond to different detection algorithms. In implementation comparative example, the at least two detection models with different detection effects may alternatively be obtained through training according to a same detection algorithm. However, when different detection models are trained, training parameters corresponding to the detection algorithms are different. In this manner, the detection model set includes at least two detection models, and all detection models included in the detection model set correspond to a same detection category. In other words, all detection models included in the detection model set are used to detect a detected object of a same detection category.

According to the invention, the different detection algorithms include: a faster region-based convolutional neural network (faster region-based convolutional neural network, Faster-RCNN), a grid region-based convolutional neural network (grid region-based convolutional neural network, Grid-RCNN), a you only look once (you only look once, YOLO) network.

For example, in some application scenarios, a pedestrian needs to be labeled. In this case, for a pedestrian detection category, detection models used to label a pedestrian may be generated through separate training based on Faster-RCNN and Grid-RCNN. In this application scenario, the detection model set includes two detection models: a detection model that is generated through training based on Faster-RCNN and that is used to label a pedestrian, and a detection model that is generated through training based on Grid-RCNN and that is used to label a pedestrian.

Optionally, when detected objects of two or more detection categories need to be labeled, for each detection category, at least two detection models with different detection effects may be generated through training. For a manner of obtaining the detection models, refer to the foregoing embodiment. Details are not described herein again. In this manner, the detection model set includes a plurality of detection models. The plurality of detection models included in the detection model set may be classified into two or more detection categories based on detection categories. Each detection category corresponds to at least two detection models with different detection effects, and is used to label a detected object of the detection category. For a detection algorithm used when the detection model is obtained, refer to the foregoing enumerated detection algorithms. Alternatively, another algorithm that can be applied to labeling the detected object may be selected according to a requirement of an actual application scenario. This is not limited in this application.

For example, in some application scenarios, if a pedestrian and a car need to be labeled, detection models used to label a pedestrian may be generated through separate training based on Faster-RCNN and Grid-RCNN, and detection models used to label a car may be generated through separate training based on Faster-RCNN and Grid-RCNN. In this application scenario, the detection model set includes four detection models: a detection model that is generated through training based on Faster-RCNN and that is used to label a pedestrian, a detection model that is generated through training based on Grid-RCNN and that is used to label a pedestrian, a detection model that is generated through training based on Faster-RCNN and that is used to label a car, and a detection model that is generated through training based on Grid-RCNN and that is used to label a car.
Optionally, when detected objects of two or more detection categories need to be labeled, for at least one of the detection categories, at least two detection models with different detection effects may be generated through training. For each of the remaining detection categories, one detection model is generated through training. For a manner of obtaining the detection model, refer to the foregoing embodiment. Details are not described herein again. In this implementation, the detection model set includes a plurality of detection models, and the plurality of detection models included in the detection model set are classified based on detection categories, and may be classified into two or more detection categories, including a detection category corresponding to one detection model, and a detection category corresponding to at least two detection models with different detection effects. For a detection algorithm used when the detection model is obtained, refer to the foregoing enumerated detection algorithms. Alternatively, another algorithm that can be applied to labeling the detected object may be selected according to a requirement of an actual application scenario. This is not limited in this application.

For example, in some application scenarios, if a pedestrian and a car need to be labeled, detection models used to label a pedestrian may be generated through separate training based on Faster-RCNN and Grid-RCNN, and a detection model used to label a car may be generated through training based on YOLO. In this application scenario, the detection model set includes three detection models: a detection model that is generated through training based on Faster-RCNN and that is used to label a pedestrian, a detection model that is generated through training based on Grid-RCNN and that is used to label a pedestrian, and a detection model that is generated through training based on YOLO and that is used to label a car.

Optionally, for each of a plurality of detection categories, at least two detection models with different detection effects may be generated through training. In other words, each of the plurality of detection categories corresponds to at least two detection models. A quantity of the plurality of detection categories may be greater than a quantity of detection categories that need to be labeled in an actual application scenario. For a manner of obtaining the detection model, refer to the foregoing embodiment. Details are not described herein again. In this manner, the detection model set includes a plurality of detection models, and the plurality of detection models included in the detection model set are classified based on detection categories, and may be classified into a plurality of detection categories. A quantity of the plurality of detection categories is greater than a quantity of detection categories that need to be labeled in an actual application scenario. Each detection category corresponds to at least two detection models with different detection effects, and is used to label a detected object of the detection category. For a detection algorithm used when the detection model is obtained, refer to the foregoing enumerated detection algorithms. Alternatively, another algorithm that can be applied to labeling the detected object may be selected according to a requirement of an actual application scenario. This is not limited in this application.

For example, in some application scenarios, if a pedestrian and a car need to be labeled, detection models used to label a pedestrian may be generated through separate training based on Faster-RCNN and Grid-RCNN, detection models used to label a car may be generated through separate training based on Faster-RCNN and Grid-RCNN, detection models used to label a tram may be generated through separate training based on Faster-RCNN and YOLO, and detection models used to label a motorcycle may be generated through separate training based on YOLO and Grid-RCNN. In this application scenario, the detection model set includes eight detection models: a detection model that is generated through training based on Faster-RCNN and that is used to label a pedestrian, a detection model that is generated through training based on Grid-RCNN and that is used to label a pedestrian, a detection model that is generated through training based on Faster-RCNN and that is used to label a car, a detection model that is generated through training based on Grid-RCNN and that is used to label a car, a detection model that is generated through training based on Faster-RCNN and that is used to label a tram, a detection model that is generated through training based on YOLO and that is used to label a tram, a detection model that is generated through training based on YOLO and that is used to label a motorcycle, and a detection model that is generated through training based on Grid-RCNN and that is used to label a motorcycle.

It should be noted that, when a detection model corresponding to each detection category is generated through training, different detection categories may correspond to different detection algorithms, or may correspond to a same detection algorithm. This is not limited in this application.

In a model training manner, a detection model set that better meets a requirement of a current application scenario may be generated according to a requirement of the current application scenario. After the to-be-labeled image is labeled by using the detection model set, an obtained labeling result is more accurate and has better applicability.

In a possible implementation, a detection model set including detection models generated through training may be further preset in a system. When step S101 is performed, the preset detection model set is directly obtained from the system. In this implementation, a process of obtaining the detection model set is simpler.

Step S102: Label the to-be-labeled image by using the detection model set, to obtain a first labeling information set.

After the detection model set is obtained, the to-be-labeled image is labeled by using each detection model in the detection model set, and labeling results obtained after all detection models included in the detection model set label the to-be-labeled image form the first labeling information set.

The first labeling information set may be empty. In other words, there is no element in the first labeling information set. It indicates that the to-be-labeled image does not include a detected object of a detection category corresponding to a detection model included in the detection model set.

For example, the detection model set includes the detection model that is generated through training based on Faster-RCNN and that is used to label a pedestrian and the detection model that is generated through training based on Grid-RCNN and that is used to label a pedestrian. After the to-be-labeled image is labeled by using the detection model set, if the obtained first labeling information set is empty, it indicates that there is no pedestrian in the to-be-labeled image.

For another example, the detection model set includes the detection model that is generated through training based on Faster-RCNN and that is used to label a pedestrian, the detection model that is generated through training based on Grid-RCNN and that is used to label a pedestrian, the detection model that is generated through training based on Faster-RCNN and that is used to label a car, and the detection model that is generated through training based on Grid-RCNN and that is used to label a car. After the to-be-labeled image is labeled by using the detection model set, if the obtained first labeling information set is empty, it indicates that there is no pedestrian or car in the to-be-labeled image.

The first labeling information set may include at least one piece of first labeling information, the to-be-labeled image includes at least one first detected object, and the first labeling information corresponds to labeling information of the first detected object. In other words, the first labeling information included in the first labeling information set is the labeling information of the first detected object in the to-be-labeled image.

The first labeling information includes first location information and first category information. The first location information is location information of a rectangular bounding box corresponding to the first labeling information. The rectangular bounding box may be determined in the to-be-labeled image based on the first location information. The rectangular bounding box may be used to label the first detected object corresponding to the first labeling information in the to-be-labeled image. The first category information is used to indicate a detection category of the first detected object corresponding to the first labeling information.

In a possible implementation, the first location information may include the following information: coordinate information of a first vertex and coordinate information of a second vertex. The first vertex and the second vertex are located on a same diagonal line of a rectangular bounding box corresponding to the first location information. In a possible implementation, the first location information may include the following information: coordinate information of a central point of a rectangular bounding box corresponding to the first location information, and length and width information of the rectangular bounding box. In addition, the first location information may alternatively be other information that can be used to determine the rectangular bounding box corresponding to the first location information. This is not limited in this application.

After the first labeling information set is obtained, first labeling information of a same category in the first labeling information set may be clustered, to generate at least one first cluster. One first cluster corresponds to one first detected object. Second labeling information of the first detected object corresponding to the first cluster may be generated based on first labeling information included in each first cluster. There is no error between a rectangular bounding box determined based on the second labeling information and a rectangular bounding box corresponding to an actual location of the first detected object, or the error is less than a pixel level. Therefore, in a specific application scenario, the second labeling information may be determined as actual labeling information of the first detected object. The first detected object may be labeled in the to-be-labeled image by using a rectangular bounding box based on the second labeling information.

The second labeling information includes second location information and second category information. The second location information is location information of a rectangular bounding box corresponding to the second labeling information. The rectangular bounding box corresponding to the second labeling information may be determined in the to-be-labeled image based on the second location information. The second category information is used to indicate a detection category of a first detected object corresponding to the second labeling information. For specific content of the second location information, refer to the first location information. Details are not described herein again.

In a possible implementation, clustering the first labeling information of a same category in the first labeling information set, to generate the at least one first cluster may be implemented in the following manner: obtaining an intersection over union of rectangular bounding boxes corresponding to any two pieces of first labeling information of a same category in the first labeling information set; and clustering the first labeling information of a same category in the first labeling information set based on the intersection over union of rectangular bounding boxes, to generate the at least one first cluster.

The intersection over union of rectangular bounding boxes corresponding to any two pieces of first labeling information of a same category in the first labeling information set is a ratio of an area of an intersection set of the two rectangular bounding boxes to an area of a union set of the two rectangular bounding boxes. When the first labeling information of a same category in the first labeling information set is clustered based on the intersection over union of rectangular bounding boxes, a plurality of clustering manners may be used, for example, a density -based clustering manner or a spectral clustering manner. This is not limited in this application.

In addition, a distance measure used in a process of clustering the first labeling information of a same category in the first labeling information set to generate the at least one first cluster is not limited to the intersection over union of rectangular bounding boxes, and another distance measure may alternatively be selected, for example, a distance between central points of rectangular bounding boxes, namely, a distance between centers of the two rectangular bounding boxes.

In a possible implementation, generating, based on the first labeling information included in each first cluster, the second labeling information of the first detected object corresponding to the first cluster may be implemented in the following manner: generating, based on the first location information in the first labeling information included in the first cluster, the second location information of the first detected object corresponding to the first cluster; and generating, based on the first category information in the first labeling information included in the first cluster, the second category information of the first detected object corresponding to the first cluster.

In a possible implementation, the generating, based on the first location information in the first labeling information included in the first cluster, the second location information of the first detected object corresponding to the first cluster may be implemented in the following manner: performing average value calculation on the first location information in the first labeling information included in the first cluster, to generate the second location information of the first detected object corresponding to the first cluster.

In a possible implementation, the generating, based on the first location information in the first labeling information included in the first cluster, the second location information of the first detected object corresponding to the first cluster may alternatively be implemented in the following manner: performing weighted average value calculation on the first location information in the first labeling information included in the first cluster, to generate the second location information of the first detected object corresponding to the first cluster.

In a possible implementation, the generating, based on the first category information in the first labeling information included in the first cluster, the second category information of the first detected object corresponding to the first cluster may be implemented in the following manner: determining a first quantity of pieces of the first labeling information included in the first cluster; and if the first quantity is greater than or equal to a preset quantity threshold, determining that the first category information in the first labeling information included in the first cluster is the second category information of the first detected object corresponding to the first cluster.

The preset quantity threshold may be set according to a requirement of an application scenario. When a specific application scenario has a relatively high requirement on accuracy of a labeling result, the preset quantity threshold may be set to a relatively large value. For example, when a quantity of detection models corresponding to a detection category indicated by the first category information in the first labeling information included in the first cluster is A, the preset quantity threshold may be set to A-1, where A is a positive integer. When a specific application scenario has a relatively low requirement on accuracy of a labeling result, the preset quantity threshold may be set to a relatively small value. For example, when a quantity of detection models corresponding to a detection category indicated by the first category information in the first labeling information included in the first cluster is A, the preset quantity threshold may be set to A-2 or A-3, where A is a positive integer.

In a possible implementation, the generating, based on the first category information in the first labeling information included in the first cluster, the second category information of the first detected object corresponding to the first cluster may alternatively be implemented in the following manner: determining a first quantity of pieces of the first labeling information included in the first cluster; and if the first quantity is less than a preset quantity threshold, obtaining a first classification model associated with the first category information in the first labeling information included in the first cluster, and determining, based on the first classification model and the second location information of the first detected object corresponding to the first cluster, the second category information of the first detected object corresponding to the first cluster. For the preset quantity threshold, refer to the foregoing embodiment. Details are not described herein again.

In a possible implementation, before the first classification model associated with the first category information in the first labeling information included in the first cluster is obtained, a classification model set is first obtained. The classification model set includes at least two classification models, and the at least two classification models in the classification model set correspond to a same detection category. The at least two classification models included in the classification model set include the first classification model.

In a possible implementation, classification models included in the classification model set may be generated through model training. For example,
optionally, when a detected object of only one detection category needs to be labeled, for the detection category, at least two classification models with different classification effects may be generated through training. In a possible implementation, the at least two classification models with different classification effects may be obtained through training according to different classification algorithms. In other words, one classification model corresponds to one classification algorithm, and different classification models correspond to different classification algorithms. In another possible implementation, the at least two classification models with different classification effects may alternatively be obtained through training according to a same classification algorithm. However, when different classification models are trained, training parameters corresponding to the classification algorithms are different. In this manner, the classification model set includes at least two classification models, and all classification models included in the classification model set correspond to a same detection category. In other words, all classification models included in the classification model set are used to label a detected object of a same detection category. In this implementation, a first classification model associated with first category information in first labeling information included in each first cluster may be a classification model corresponding to the detection category indicated by the first category information.

For example, the classification algorithm may include at least one of the following: a cascade region-based convolutional neural network (cascade region-based convolutional neural network, Cascade-RCNN), a deformable convolutional neural network v2 (deformable convnets v2, DCNv2), an efficient network (Efficientnet), or the like.

For example, in some application scenarios, a pedestrian needs to be labeled. In this case, for a pedestrian detection category, classification models used to label a pedestrian may be generated through separate training based on Cascade-RCNN and DCNv2. In this application scenario, the classification model set includes two classification models: a classification model that is generated through training based on Cascade-RCNN and that is used to label a pedestrian, and a classification model that is generated through training based on DCNv2 and that is used to label a pedestrian. In this application scenario, the first classification model associated with the first category information in the first labeling information included in each first cluster includes the classification model that is generated through training based on Cascade-RCNN and that is used to label a pedestrian, and the classification model that is generated through training based on DCNv2 and that is used to label a pedestrian.

Optionally, when detected objects of two or more detection categories need to be labeled, for each detection category, at least two classification models with different classification effects may be generated through training. For a manner of obtaining the classification models, refer to the foregoing embodiment. Details are not described herein again. In this manner, the classification model set includes a plurality of classification models. The plurality of classification models included in the classification model set may be classified based on detection categories, and may be classified into two or more detection categories. Each detection category corresponds to at least two classification models with different classification effects, and is used to label a detected object of the detection category. For a classification algorithm used when the classification model is obtained, refer to the foregoing enumerated classification algorithms. Alternatively, another classification algorithm that can be applied to labeling the detected object may be selected according to a requirement of an actual application scenario. This is not limited in this application. In this implementation, a first classification model associated with first category information in first labeling information included in each first cluster may include only a classification model corresponding to the detection category indicated by the first category information, or may not only include a classification model corresponding to the detection category indicated by the first category information, but also include a classification model corresponding to another detection category in the classification model set. This is not limited in this application.

For example, in some application scenarios, if a pedestrian and a car need to be labeled, classification models used to label a pedestrian may be generated through separate training based on Cascade-RCNN and DCNv2, and classification models used to label a car may be generated through separate training based on Cascade-RCNN and DCNv2. In this application scenario, the classification model set includes four classification models: a classification model that is generated through training based on Cascade-RCNN and that is used to label a pedestrian, a classification model that is generated through training based on DCNv2 and that is used to label a pedestrian, a classification model that is generated through training based on Cascade-RCNN and that is used to label a car, and a classification model that is generated through training based on DCNv2 and that is used to label a car. In this application scenario, when a detection category indicated by the first category information in the first labeling information included in the first cluster is a pedestrian, the first classification model associated with the first category information may include only the classification model that is generated through training based on Cascade-RCNN and that is used to label a pedestrian and the classification model that is generated through training based on DCNv2 and that is used to label a pedestrian. Alternatively, the first classification model associated with the first category information may include the classification model that is generated through training based on Cascade-RCNN and that is used to label a pedestrian, the classification model that is generated through training based on DCNv2 and that is used to label a pedestrian, the classification model that is generated through training based on Cascade-RCNN and that is used to label a car, and the classification model that is generated through training based on DCNv2 and that is used to label a car. Similarly, when a detection category indicated by the first category information in the first labeling information included in the first cluster is a car, the first classification model associated with the first category information may include the classification model that is generated through training based on Cascade-RCNN and that is used to label a pedestrian, the classification model that is generated through training based on DCNv2 and that is used to label a pedestrian, the classification model that is generated through training based on Cascade-RCNN and that is used to label a car, and the classification model that is generated through training based on DCNv2 and that is used to label a car. Alternatively, the first classification model associated with the first category information may include only the classification model that is generated through training based on Cascade-RCNN and that is used to label a car and the classification model that is generated through training based on DCNv2 and that is used to label a car.

Optionally, when detected objects of two or more detection categories need to be labeled, for at least one of the detection categories, at least two classification models with different classification effects may be generated through training. For each of the remaining detection categories, one classification model is generated through training. For a manner of obtaining the classification model, refer to the foregoing embodiment. Details are not described herein again. In this implementation, the classification model set includes a plurality of classification models. The plurality of classification models included in the classification model set may be classified based on detection categories, and may be classified into two or more detection categories. There may be a detection category corresponding to one classification model, and there may also be a detection category corresponding to at least two classification models with different classification effects. For a classification algorithm used when the classification model is obtained, refer to the foregoing enumerated classification algorithms. Alternatively, another classification algorithm that can be applied to labeling the detected object may be selected according to a requirement of an actual application scenario. This is not limited in this application. In this implementation, a first classification model associated with first category information in first labeling information included in each first cluster may include only a classification model corresponding to the detection category indicated by the first category information, or may not only include a classification model corresponding to the detection category indicated by the first category information, but also include a classification model corresponding to another detection category in the classification model set. This is not limited in this application.

For example, in some application scenarios, if a pedestrian and a car need to be labeled, classification models used to label a pedestrian may be generated through separate training based on Cascade-RCNN and DCNv2, and a classification model used to label a car may be generated through training based on Efficientnet. In this application scenario, the classification model set includes three classification models: a classification model that is generated through training based on Cascade-RCNN and that is used to label a pedestrian, a classification model that is generated through training based on DCNv2 and that is used to label a pedestrian, a classification model that is generated through training based on Efficientnet and that is used to label a car. In this application scenario, when a detection category indicated by the first category information in the first labeling information included in the first cluster is a pedestrian, the first classification model associated with the first category information may include only the classification model that is generated through training based on Cascade-RCNN and that is used to label a pedestrian and the classification model that is generated through training based on DCNv2 and that is used to label a pedestrian. Alternatively, the first classification model associated with the first category information may include the classification model that is generated through training based on Cascade-RCNN and that is used to label a pedestrian, the classification model that is generated through training based on DCNv2 and that is used to label a pedestrian, and the classification model that is generated through training based on Efficientnet and that is used to label a car. Similarly, when a detection category indicated by the first category information in the first labeling information included in the first cluster is a car, the first classification model associated with the first category information may include the classification model that is generated through training based on Efficientnet and that is used to label a car, the classification model that is generated through training based on Cascade-RCNN and that is used to label a pedestrian, and the classification model that is generated through training based on DCNv2 and that is used to label a pedestrian. Alternatively, the first classification model associated with the first category information may include only the classification model that is generated through training based on Efficientnet and that is used to label a car.

Optionally, for each of a plurality of detection categories, at least two classification models with different classification effects may be generated through training. In other words, each of the plurality of detection categories corresponds to at least two classification models. A quantity of the plurality of detection categories may be greater than a quantity of detection categories that need to be labeled in an actual application scenario. For a manner of obtaining the classification model, refer to the foregoing embodiment. Details are not described herein again. In this manner, the classification model set includes a plurality of classification models, and the plurality of classification models included in the classification model set are classified based on detection categories, and may be classified into a plurality of detection categories. A quantity of the plurality of detection categories is greater than a quantity of detection categories that need to be labeled in an actual application scenario. Each detection category corresponds to at least two classification models with different classification effects, and is used to label a detected object of the detection category. For a classification algorithm used when the classification model is obtained, refer to the foregoing enumerated classification algorithms. Alternatively, another classification algorithm that can be applied to labeling the detected object may be selected according to a requirement of an actual application scenario. This is not limited in this application. In this implementation, a first classification model associated with first category information in first labeling information included in each first cluster may include only a classification model corresponding to the detection category indicated by the first category information, or may not only include a classification model corresponding to the detection category indicated by the first category information, but also include a classification model corresponding to another detection category in the classification model set. This is not limited in this application.

For example, in some application scenarios, if a pedestrian and a car need to be labeled, classification models used to label a pedestrian may be generated through separate training based on Cascade-RCNN and DCNv2, classification models used to label a car may be generated through separate training based on Cascade-RCNN and DCNv2, classification models used to label a tram may be generated through separate training based on Cascade-RCNN and Efficientnet, and classification models used to label a motorcycle may be generated through separate training based on DCNv2 and Efficientnet. In this application scenario, the classification model set includes eight classification models: a classification model that is generated through training based on Cascade-RCNN and that is used to label a pedestrian, a classification model that is generated through training based on DCNv2 and that is used to label a pedestrian, a classification model that is generated through training based on Cascade-RCNN and that is used to label a car, a classification model that is generated through training based on DCNv2 and that is used to label a car, a classification model that is generated through training based on Cascade-RCNN and that is used to label a tram, a classification model that is generated through training based on Efficientnet and that is used to label a tram, a classification model that is generated through training based on DCNv2 and that is used to label a motorcycle, and a classification model that is generated through training based on Efficientnet and that is used to label a motorcycle. In this application scenario, when a detection category indicated by the first category information in the first labeling information included in the first cluster is a pedestrian, the first classification model associated with the first category information may include only the classification model that is generated through training based on Cascade-RCNN and that is used to label a pedestrian and the classification model that is generated through training based on DCNv2 and that is used to label a pedestrian. Alternatively, the first classification model associated with the first category information may include the classification model that is generated through training based on Cascade-RCNN and that is used to label a pedestrian, the classification model that is generated through training based on DCNv2 and that is used to label a pedestrian, the classification model that is generated through training based on Cascade-RCNN and that is used to label a car, the classification model that is generated through training based on DCNv2 and that is used to label a car, and/or the classification model that is generated through training based on Cascade-RCNN and that is used to label a tram and the classification model that is generated through training based on Efficientnet and that is used to label a tram, and/or the classification model that is generated through training based on DCNv2 and that is used to label a motorcycle and the classification model that is generated through training based on Efficientnet and that is used to label a motorcycle. When a detection category indicated by the first category information in the first labeling information included in the first cluster is a car, the first classification model associated with the first category information may include only the classification model that is generated through training based on Cascade-RCNN and that is used to label a car and the classification model that is generated through training based on DCNv2 and that is used to label a car. Alternatively, the first classification model associated with the first category information may include the classification model that is generated through training based on Cascade-RCNN and that is used to label a car, the classification model that is generated through training based on DCNv2 and that is used to label a car, the classification model that is generated through training based on Cascade-RCNN and that is used to label a pedestrian, the classification model that is generated through training based on DCNv2 and that is used to label a pedestrian, and/or the classification model that is generated through training based on Cascade-RCNN and that is used to label a tram and the classification model that is generated through training based on Efficientnet and that is used to label a tram, and/or the classification model that is generated through training based on DCNv2 and that is used to label a motorcycle and the classification model that is generated through training based on Efficientnet and that is used to label a motorcycle.

It should be noted that, when a classification model corresponding to each detection category is generated through training, different detection categories may correspond to different classification algorithms, or may correspond to a same classification algorithm. This is not limited in this application.

In addition, a classification algorithm used for training the classification model in this application may be the same as or different from a detection algorithm used for training the detection model. This is not limited in this application either.

The classification model in this application may be a binary classification model, or may be a multi-class classification model. This is not limited in this application either.

In a possible implementation, both a classification model set including trained classification models and a correspondence between a detection category and a first classification model may be preset in a system. When the first classification model associated with the first category information in the first labeling information included in the first cluster is obtained, a first classification model corresponding to the detection category indicated by the first category information is obtained from the system. In this implementation, a process of obtaining the first classification model associated with the first category information in the first labeling information included in the first cluster is simpler.

In a possible implementation, the determining, based on the first classification model and the second location information of the first detected object corresponding to the first cluster, the second category information of the first detected object corresponding to the first cluster may be implemented in the following manner: entering the second location information of the first detected object corresponding to the first cluster into each first classification model associated with the first category information in the first labeling information included in the first cluster, to obtain a plurality of classification labeling results, and when the plurality of classification labeling results are different (for example, some classification recognition results are Yes, and some classification recognition results are No), voting on the plurality of classification labeling results, to obtain the second category information of the first detected object; or when the plurality of classification recognition results are the same (for example, all are Yes or all are No), determining that the second category information of the first detected object is empty, and deleting the first labeling information corresponding to the first cluster. In this case, it is considered that the first detected object does not exist at a location indicated by the second location information.

For example, when a detection category indicated by the first category information in the first labeling information included in the first cluster is a car, the first classification model associated with the first category information includes a classification model that is generated through training based on Cascade-RCNN and that is used to label a car, a classification model that is generated through training based on DCNv2 and that is used to label a car, a classification model that is generated through training based on Cascade-RCNN and that is used to label a tram, and a classification model that is generated through training based on Efficientnet and that is used to label a tram. After the second location information of the first detected object corresponding to the first cluster is entered into the classification model that is generated through training based on Cascade-RCNN and that is used to label a car, an obtained classification labeling result is that the detected object belongs to a car. After the second location information is entered into the classification model that is generated through training based on DCNv2 and that is used to label a car, an obtained classification labeling result is that the detected object belongs to a car. After the second location information is entered into the classification model that is generated through training based on Cascade-RCNN and that is used to label a tram, an obtained classification labeling result is that the detected object does not belong to a tram. After the second location information is entered into the classification model that is generated through training based on Efficientnet and that is used to label a tram, an obtained classification labeling result is that the detected object belongs to a tram. Through voting on the four classification labeling results, the obtained second category information of the first detected object is a car. In this case, it is considered that there is a car at a location indicated by the second location information.

For another example, when a detection category indicated by the first category information in the first labeling information included in the first cluster is a car, the first classification model associated with the first category information includes a classification model that is generated through training based on Cascade-RCNN and that is used to label a car, a classification model that is generated through training based on DCNv2 and that is used to label a car, a classification model that is generated through training based on Cascade-RCNN and that is used to label a tram, and a classification model that is generated through training based on Efficientnet and that is used to label a tram. After the second location information of the first detected object corresponding to the first cluster is entered into the classification model that is generated through training based on Cascade-RCNN and that is used to label a car, an obtained classification labeling result is that the detected object belongs to a car. After the second location information is entered into the classification model that is generated through training based on DCNv2 and that is used to label a car, an obtained classification labeling result is that the detected object belongs to a car. After the second location information is entered into the classification model that is generated through training based on Cascade-RCNN and that is used to label a tram, an obtained classification labeling result is that the detected object belongs to a tram. After the second location information is entered into the classification model that is generated through training based on Efficientnet and that is used to label a tram, an obtained classification labeling result is that the detected object belongs to a tram. In this case, it is determined that the second category information of the first detected object is empty and there is no car in a location indicated by the second location information.

It should be noted that, after the plurality of classification labeling results are obtained, the plurality of classification labeling results may be further processed in another manner, to obtain the second category information of the first detected object. This is not limited in this application.

In the labeling information determining method provided in this application, a detection model set is first obtained. The detection model set includes at least two detection models, and the at least two detection models in the detection model set correspond to a same detection category. Then, a to-be-labeled image is labeled by using the detection model set, to obtain a first labeling information set. In other words, when labeling information is determined by using the method, the to-be-labeled image is not labeled by using a single detection model, but labeled by using a plurality of detection models. The plurality of detection models may correspond to a plurality of detection categories, or may correspond to a same detection category. When the plurality of detection models correspond to the plurality of detection categories, a detection model that is friendlier to a detected object of each detection category may be obtained. In this way, detection accuracy is higher, and more accurate labeling information may be obtained. When the plurality of detection models correspond to the same detection category, a plurality of pieces of labeling information may be obtained for a same detected object, and actual labeling information subsequently determined based on the plurality of pieces of labeling information is also more accurate. Therefore, labeling information with higher accuracy may be obtained by using the method. When a rectangular bounding box used to label a detected object is subsequently determined based on the labeling information, an error between the obtained rectangular bounding box and a rectangular bounding box corresponding to an actual location is significantly reduced at a pixel level, and can be ignored basically. Therefore, applicability is good.

The method embodiments described in this specification may be independent solutions, or may be combined based on internal logic. These solutions all fall within the protection scope of this application.

It may be understood that in the foregoing method embodiments, the methods and operations implemented by the terminal device may alternatively be implemented by a component (for example, a chip or a circuit) that can be used in the terminal device.

The foregoing mainly describes the solutions provided in embodiments of this application from a perspective of interaction between network elements. It may be understood that, to implement the foregoing functions, each of network elements such as the terminal device includes a corresponding hardware structure and/or software module for performing each function. A person skilled in the art should be easily aware that, with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device may be divided into function modules based on the foregoing method examples. For example, each function module may be obtained through division based on a corresponding function, or two or more functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used. An example in which each function module is obtained through division based on each corresponding function is used below for description.

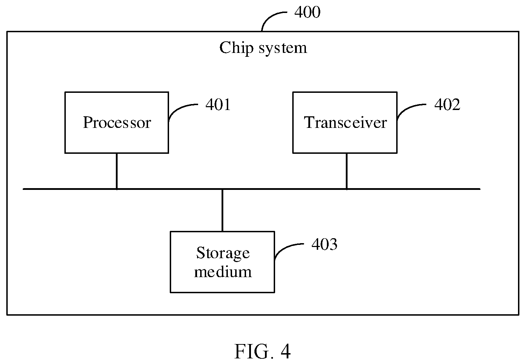

The method provided in embodiments of this application is described above in detail with reference to FIG. 2. The apparatus provided in embodiments of this application is described in detail below with reference to FIG. 3 and FIG. 4. It should be understood that descriptions of the apparatus embodiments correspond to descriptions of the method embodiments. Therefore, for content not described in detail, refer to the foregoing method embodiments. For brevity, details are not described herein again.

FIG. 3 is a block diagram of a structure of an implementation of a labeling information determining apparatus according to this application. The labeling information determining apparatus may be a terminal device, for example, a head unit or a mobile phone in the field of autonomous driving and intelligent cockpit. Alternatively, the labeling information determining apparatus may be a chip or an element in a terminal device. Alternatively, the labeling information determining apparatus may be in another product form. The following describes the labeling information determining apparatus from a logical function perspective by using FIG. 3.

As shown in FIG. 3, an apparatus 300 may include an obtaining module 301 and a processing module 302. The apparatus 300 may be configured to perform actions performed by the terminal device in the method embodiment shown in FIG. 2.

For example, the obtaining module 301 may be configured to obtain a detection model set. The detection model set includes at least two detection models, and the at least two detection models in the detection model set correspond to a same detection category. The processing module 302 may be configured to label a to-be-labeled image by using the detection model set, to obtain a first labeling information set.

Optionally, the to-be-labeled image includes at least one first detected object. The first labeling information set includes at least one piece of first labeling information. The first labeling information corresponds to labeling information of the first detected object. The first labeling information includes first location information and first category information. The processing module 302 is further configured to: cluster first labeling information of a same category in the first labeling information set, to generate at least one first cluster, where the first cluster corresponds to the first detected object; and generate, based on the at least one piece of first labeling information included in the first cluster, second labeling information of the first detected object corresponding to the first cluster, where the second labeling information includes second location information and second category information.

Optionally, the processing module 302 is specifically configured to: generate, based on the first location information in the first labeling information included in the first cluster, the second location information of the first detected object corresponding to the first cluster; and generate, based on the first category information in the first labeling information included in the first cluster, the second category information of the first detected object corresponding to the first cluster.

Optionally, the processing module 302 is specifically configured to perform average value calculation on the first location information in the first labeling information included in the first cluster, to generate the second location information of the first detected object corresponding to the first cluster.

Optionally, the processing module 302 is specifically configured to: determine a first quantity of pieces of the first labeling information included in the first cluster; and if the first quantity is greater than or equal to a preset quantity threshold, determine that the first category information in the first labeling information included in the first cluster is the second category information of the first detected object corresponding to the first cluster.

Optionally, the processing module 302 is specifically configured to: determine a first quantity of pieces of the first labeling information included in the first cluster; and if the first quantity is less than a preset quantity threshold, obtain a first classification model associated with the first category information in the first labeling information included in the first cluster, and determine, based on the first classification model and the second location information of the first detected object corresponding to the first cluster, the second category information of the first detected object corresponding to the first cluster. The at least one resource parameter includes at least one of the following: channel occupancy information, modulation and coding scheme information, resource periodicity information, and resource duration information.

Optionally, the processing module 302 is specifically configured to: obtain an intersection over union of rectangular bounding boxes corresponding to any two pieces of first labeling information of a same category in the first labeling information set; and cluster the first labeling information of a same category in the first labeling information set based on the intersection over union of rectangular bounding boxes, to generate the at least one first cluster.

Optionally, the detection model set is preset.

Optionally, the obtaining module 301 is further configured to obtain a classification model set. The classification model set includes at least two classification models, the at least two classification models in the classification model set correspond to a same detection category, and the at least two classification models include the first classification model.

Optionally, both the detection model and the classification model may be separately disposed outside the obtaining module 301, to facilitate replacement according to a requirement of an actual application scenario. A function of the obtaining module 301 is not affected during replacement.

In other words, the apparatus 300 may implement steps or procedures performed by the terminal device in the method shown in FIG. 2 according to embodiments of this application. The apparatus 300 may include modules configured to perform the method performed by the terminal device in the method shown in FIG. 2. In addition, the modules in the apparatus 300 and the foregoing other operations and/or functions are separately used to implement corresponding steps in the method shown in FIG. 2. For example, the obtaining module 301 in the apparatus 300 may be configured to perform step S101 in the method shown in FIG. 2, and the processing module 302 may be configured to perform step S102 in the method shown in FIG. 2.

It should be understood that a specific process in which the modules perform the foregoing corresponding steps is described in detail in the foregoing method embodiments. For brevity, details are not described herein again.

An embodiment of this application further provides a processing apparatus, including at least one processor and a communication interface. The communication interface is configured to provide an information input and/or output for the at least one processor, and the at least one processor is configured to perform the method in the foregoing method embodiments.

It should be understood that the processing apparatus may be a chip system. For example, FIG. 4 is a block diagram of a structure of an implementation of a chip system according to this application. The chip system shown in FIG. 4 may be a general-purpose processor, or may be a dedicated processor. A chip system 400 includes at least one processor 401. The at least one processor 401 may be configured to support the apparatus shown in FIG. 3 in performing the technical solution shown in FIG. 2.

Optionally, the chip system 400 may further include a transceiver 402. The transceiver 402 is controlled by the processor 401, and is configured to support the apparatus shown in FIG. 3 in performing the technical solutions shown in FIG. 2. Optionally, the chip system 400 shown in FIG. 4 may further include a storage medium 403. Specifically, the transceiver 402 may be replaced with a communication interface, and the communication interface provides an information input and/or output for the at least one processor.

It should be noted that the chip system 400 shown in FIG. 4 may be implemented by using the following circuit or component: one or more field programmable gate arrays (field programmable gate arrays, FPGAs), a programmable logic device (programmable logic device, PLD), an application-specific integrated circuit (application-specific integrated circuit, ASIC), or a system on chip (system on chip, SoC), a central processing unit (central processing unit, CPU), a network processor (network processor, NP), a digital signal processor (digital signal processor, DSP), a micro controller unit (micro controller unit, MCU), a controller, a state machine, gate logic, a discrete hardware component, any other suitable circuit, or any combination of circuits that can perform various functions described in this application.

In an implementation process, steps in the foregoing methods can be completed by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type.

According to the method provided in embodiments of this application, an embodiment of this application further provides a computer program product. The computer program product includes a computer program or instructions. When the computer program or the instructions is/are run on a computer, the computer is enabled to perform the method according to the embodiment shown in FIG. 1.

According to the method provided in embodiments of this application, an embodiment of this application further provides a computer storage medium. The computer storage medium stores a computer program or instructions. When the computer program or the instructions is/are run on a computer, the computer is enabled to perform the method according to the embodiment shown in FIG. 1.

According to the method provided in the embodiments of this application, an embodiment of this application further provides a terminal device. The terminal device is a transportation vehicle or an intelligent device, and includes an uncrewed aerial vehicle, an uncrewed transportation vehicle, an automobile, a robot, or the like. The transportation vehicle or the intelligent device includes the foregoing labeling information determining apparatus.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on the computer, the procedures or functions according to embodiments of this application are all or partially generated. The computer may be a general-purpose computer, a dedicated computer, a computer network, or another programmable apparatus. The computer program or the instructions may be stored in a computer-readable storage medium or may be transmitted from one computer-readable storage medium to another computer-readable storage medium. For example, the computer program or the instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

The terminal device in the foregoing apparatus embodiments corresponds to the terminal device in the method embodiments. A corresponding module or unit performs a corresponding step. For example, a communications module (a transceiver) performs a receiving step or a sending step in the method embodiments, and a processing module (a processor) may perform another step other than the sending step and the receiving step. For a function of a specific module, refer to the corresponding method embodiment. There may be one or more processors.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the modules is merely logical function division and may be other division in an actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The modules described as separate parts may or may not be physically separate, and parts displayed as modules may or may not be physical units, may be located in one position, or may be distributed on a plurality of network units. Some or all of the units may be selected according to actual requirements to achieve the objectives of the solutions of embodiments.

In addition, function modules in embodiments of this application may be integrated into one processing unit, each of the modules may exist alone physically, or two or more modules are integrated into one unit.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The labeling information determining apparatus, the terminal device, the computer storage medium, the computer program product, and the chip system provided in the embodiments of this application are all configured to perform the method provided above. Therefore, for advantageous effects that can be achieved, refer to advantageous effects corresponding to the method provided above. Details are not described herein again.

It should be understood that, in embodiments of this application, an execution sequence of the steps should be determined based on functions and internal logic of the steps, and sequence numbers of the steps do not mean the execution sequence, and do not constitute a limitation on an implementation process of embodiments.

All parts in this specification are described in a progressive manner. For same or similar parts in embodiments, mutual reference may be made. Each embodiment focuses on a difference from other embodiments. Particularly, embodiments of the labeling information determining apparatus, the terminal device, the computer storage medium, the computer program product, and the chip system are basically similar to the method embodiments, and therefore are described briefly. For related parts, refer to descriptions in the method embodiments.

Although some preferred embodiments of this application have been described, a person skilled in the art can make changes and modifications to these embodiments once they learn the basic inventive concept. Therefore, the following claims are intended to be construed as to cover the preferred embodiments and all changes and modifications falling within the scope of said claims.

The foregoing implementations of this application are not intended to limit the protection scope of this application.

## Claims

1. A labeling information determining method, comprising:
obtaining (S101) a detection model set, wherein the detection model set comprises at least two detection models, and the at least two detection models in the detection model set correspond to a same detection category; and
labeling (S102) a to-be-labeled image comprising at least one first detected object by using the detection model set, to obtain a first labeling information set comprising first labeling information corresponding to labeling information of the first detected object, the first labeling information comprises first location information and first category information;
clustering first labeling information of a same category in the first labeling information set, to generate at least one first cluster corresponding to the first detected object;
generating, based on the at least one piece of first labeling information comprised in the first cluster, second labeling information of the first detected object corresponding to the first cluster, wherein the second labeling information comprises second location information and second category information wherein
generating the second location information is based on the first location information in the first labeling information and
**characterized in that**
generating, the second category information comprises determining a first quantity of pieces of the first labeling information comprised in the first cluster; and
if the first quantity is greater than or equal to a preset quantity threshold, determining that the first category information in the first labeling information comprised in the first cluster is the second category information of the first detected object corresponding to the first cluster or
if the first quantity is less than the preset quantity threshold, obtaining a first classification model associated with the first category information in the first labeling information comprised in the first cluster, and determining, based on the first classification model and the second location information of the first detected object corresponding to the first cluster, the second category information of the first detected object corresponding to the first cluster;
the at least two detection models with different detection effects are obtained through training according to different detection algorithms that include: a faster region-based convolutional neural network, Faster-RCNN, a grid region-based convolutional neural network, Grid-RCNN, and a you only look once, YOLO, network and
the classification model is obtained through training according to classification algorithms that include: a cascade region-based convolutional neural network, Cascade-RCNN, a deformable convolutional neural network v2, DCNv2 and an efficient network, Efficientnet.

2. The method according to claim 1, wherein the generating, based on the first location information in the first labeling information comprised in the first cluster, the second location information of the first detected object corresponding to the first cluster comprises:
performing average value calculation on the first location information in the first labeling information comprised in the first cluster, to generate the second location information of the first detected object corresponding to the first cluster.

3. The method according to claim 1 or 2, wherein the clustering first labeling information of a same category in the first labeling information set, to generate at least one first cluster comprises:
obtaining an intersection over union of rectangular bounding boxes corresponding to any two pieces of first labeling information of a same category in the first labeling information set; and
clustering the first labeling information of a same category in the first labeling information set based on the intersection over union of rectangular bounding boxes, to generate the at least one first cluster.

4. The method according to any one of claims 1 to 3, wherein the detection model set is preset.

5. The method according to claim 1, wherein the method further comprises: obtaining a classification model set, wherein the classification model set comprises at least two classification models, the at least two classification models in the classification model set correspond to a same detection category, and the at least two classification models comprise the first classification model.

6. An apparatus (300), comprising means (301, 302) for carrying out the method according to any one of claims 1 to 5.

7. A computer storage medium, comprising a computer program or instructions, wherein when the computer program or the instructions is/are executed by a computer, the method according to any one of claims 1 to 5 is performed.

8. A computer program product, wherein when the computer program product runs on a computer, the computer is enabled to perform the method according to any one of claims 1 to 5.

9. A chip system (400), comprising at least one processor (401), wherein the at least one processor (401) is coupled to at least one memory (403), and is configured to execute a computer program or instructions stored in the at least one memory (403), and when the computer program or the instructions is/are executed, the method according to any one of claims 1 to 5 is performed.

## Patentansprüche

1. Verfahren zur Bestimmung von Etikettierungsinformationen, umfassend:
Erhalten (S101) eines Erkennungsmodellsatzes, wobei der Erkennungsmodellsatz mindestens zwei Erkennungsmodelle umfasst und die mindestens zwei Erkennungsmodelle im Erkennungsmodellsatz derselben Erkennungskategorie entsprechen; und
Etikettieren (S102) eines zu etikettierenden Bildes, das mindestens ein erstes erkanntes Objekt umfasst, unter Verwendung des Erkennungsmodellsatzes, um einen ersten Etikettierungsinformationssatz zu erhalten, der erste Etikettierungsinformationen umfasst, die den Etikettierungsinformationen des ersten erkannten Objekts entsprechen, wobei die ersten Etikettierungsinformationen erste Ortsinformationen und erste Kategorieinformationen umfassen;
Clustern der ersten Etikettierungsinformationen derselben Kategorie im ersten Etikettierungsinformationssatz, um mindestens einen ersten Cluster zu erzeugen, der dem ersten erkannten Objekt entspricht;
Erzeugen, basierend auf mindestens einer im ersten Cluster enthaltenen ersten Etikettierungsinformation, einer zweiten Etikettierungsinformation des ersten erkannten Objekts, die dem ersten Cluster entspricht, wobei die zweite Etikettierungsinformation eine zweite Ortsinformation und eine zweite Kategorieinformation umfasst, wobei
das Erzeugen der zweiten Ortsinformation auf der ersten Ortsinformation in der ersten Etikettierungsinformation basiert und
**dadurch gekennzeichnet, dass**
das Erzeugen der zweiten Kategorieinformationen die Bestimmung einer ersten Menge von Teilen der ersten Etikettierungsinformation umfasst, die im ersten Cluster enthalten sind; und
wenn die erste Menge größer oder gleich einem voreingestellten Mengenschwellenwert ist, Bestimmen, dass die erste Kategorieinformation in der ersten Etikettierungsinformation, die in dem ersten Cluster enthalten ist, die zweite Kategorieinformation des ersten erkannten Objekts ist, das dem ersten Cluster entspricht, oder
wenn die erste Menge kleiner als der voreingestellte Mengenschwellenwert ist, Erhalten eines ersten Klassifizierungsmodells, das der ersten Kategorieinformation in der ersten Etikettierungsinformation zugeordnet ist, die in dem ersten Cluster umfasst ist, und Bestimmen, basierend auf dem ersten Klassifizierungsmodell und der zweiten Ortsinformation des ersten erkannten Objekts, das dem ersten Cluster entspricht, der zweiten Kategorieinformation des ersten erkannten Objekts, das dem ersten Cluster entspricht;
die mindestens zwei Erkennungsmodelle mit unterschiedlichen Erkennungseffekten durch Training gemäß verschiedener Erkennungsalgorithmen erhalten werden, einschließlich: ein schnelleres regionenbasiertes neuronales Faltungsnetzwerk, Faster-RCNN, ein gitterregionenbasiertes neuronales Faltungsnetzwerk, Grid-RCNN, und ein You Only Look Once, YOLO, -Netzwerk und
das Klassifizierungsmodell durch Training nach Klassifizierungsalgorithmen erhalten wird, die folgendes beinhalten: ein kaskadenbasiertes neuronales Netzwerk, Cascade-RCNN, ein deformierbares neuronales Faltungsnetzwerk v2, DCNv2 und ein effizientes Netzwerk, Efficientnet.

2. Verfahren nach Anspruch 1, wobei das Erzeugen, basierend auf der ersten Ortsinformation in der ersten Etikettierungsinformation, die im ersten Cluster enthalten ist, der zweiten Ortsinformation des ersten erkannten Objekts, das dem ersten Cluster entspricht, Folgendes umfasst:
Durchführen einer Durchschnittswertberechnung für die ersten Ortsinformationen in der ersten Etikettierungsinformation, die im ersten Cluster enthalten ist, um die zweite Ortsinformation des ersten erkannten Objekts zu erzeugen, die dem ersten Cluster entsprechen.

3. Verfahren nach Anspruch 1 oder 2, wobei das Clustern von ersten Etikettierungsinformationen derselben Kategorie im ersten Etikettierungsinformationssatz zum Erzeugen mindestens eines ersten Clusters Folgendes umfasst:
Erhalten eines Schnittpunkts über der Vereinigung von rechteckigen Begrenzungsrahmen, die zwei beliebigen Teilen der ersten Etikettierungsinformationen einer gleichen Kategorie im ersten Etikettierungsinformationssatz entsprechen; und
Clustern der ersten Etikettierungsinformationen einer gleichen Kategorie in dem ersten Etikettierungsinformationssatz basierend auf dem Schnittpunkt über der Vereinigung von rechteckigen Begrenzungsrahmen, um den mindestens einen ersten Cluster zu erzeugen.

4. Verfahren nach einem der Ansprüche 1 bis 3, wobei der Erkennungsmodellsatz voreingestellt ist.

5. Verfahren nach Anspruch 1, wobei das Verfahren ferner Folgendes umfasst: Erhalten eines Klassifizierungsmodellsatzes, wobei der Klassifizierungsmodellsatz mindestens zwei Klassifizierungsmodelle umfasst, die mindestens zwei Klassifizierungsmodelle in dem Klassifizierungsmodellsatz einer gleichen Erkennungskategorie entsprechen und die mindestens zwei Klassifizierungsmodelle das erste Klassifizierungsmodell umfassen.

6. Vorrichtung (300), umfassend Mittel (301, 302) zum Durchführen des Verfahrens nach einem der Ansprüche 1 bis 5.

7. Computerspeichermedium, umfassend ein Computerprogramm oder Anweisungen, wobei beim Ausführen des Computerprogramms oder der Anweisungen durch einen Computer das Verfahren nach einem der Ansprüche 1 bis 5 durchgeführt wird.

8. Computerprogrammprodukt, wobei, wenn das Computerprogrammprodukt auf einem Computer läuft, der Computer in die Lage versetzt wird, das Verfahren nach einem der Ansprüche 1 bis 5 durchzuführen.

9. Chipsystem (400), das mindestens einen Prozessor (401) umfasst, wobei der mindestens eine Prozessor (401) mit mindestens einem Speicher (403) gekoppelt ist und dazu konfiguriert ist, ein Computerprogramm oder Anweisungen, die in dem mindestens einen Speicher (403) gespeichert sind, auszuführen, und wenn das Computerprogramm oder die Anweisungen ausgeführt wird/werden, das Verfahren nach einem der Ansprüche 1 bis 5 durchgeführt wird.

## Revendications

1. Procédé de détermination d'informations d'étiquetage, comprenant :
l'obtention (S101) d'un ensemble de modèles de détection, dans lequel l'ensemble de modèles de détection comprend au moins deux modèles de détection, et les au moins deux modèles de détection dans l'ensemble de modèles de détection correspondent à une même catégorie de détection ; et
l'étiquetage (S102) d'une image à étiqueter comprenant au moins un premier objet détecté à l'aide de l'ensemble de modèles de détection, afin d'obtenir un premier ensemble d'informations d'étiquetage comprenant des premières informations d'étiquetage correspondant aux informations d'étiquetage du premier objet détecté, les premières informations d'étiquetage comprennent des premières informations de localisation et des premières informations de catégorie ;
le regroupement des premières informations d'étiquetage d'une même catégorie dans le premier ensemble d'informations d'étiquetage, afin de générer au moins un premier groupe correspondant au premier objet détecté ;
la génération, sur la base de l'au moins un élément de premières informations d'étiquetage comprises dans le premier groupe, de secondes informations d'étiquetage du premier objet détecté correspondant au premier groupe, dans lequel les secondes informations d'étiquetage comprennent des secondes informations de localisation et des secondes informations de catégorie dans lequel
la génération des secondes informations de localisation est basée sur les premières informations de localisation contenues dans les premières informations d'étiquetage et
**caractérisé en ce que**
la génération des secondes informations de catégorie comprend la détermination d'une première quantité d'éléments des premières informations d'étiquetage comprises dans le premier groupe ; et
si la première quantité est supérieure ou égale à un seuil de quantité prédéfini, le fait de déterminer que les premières informations de catégorie contenues dans les premières informations d'étiquetage comprises dans le premier groupe sont les secondes informations de catégorie du premier objet détecté correspondant au premier groupe ou
si la première quantité est inférieure au seuil de quantité prédéfini, l'obtention d'un premier modèle de classification associé aux premières informations de catégorie contenues dans les premières informations d'étiquetage comprises dans le premier groupe, et la détermination, sur la base du premier modèle de classification et des secondes informations de localisation du premier objet détecté correspondant au premier groupe, des secondes informations de catégorie du premier objet détecté correspondant au premier cluster ;
les au moins deux modèles de détection aux effets de détection différents sont obtenus par un entraînement selon différents algorithmes de détection qui comportent : un réseau neuronal convolutif par région rapide, Faster-RCNN, un réseau neuronal convolutif par région de grille, Grid-RCNN, et un réseau de consultation unique, YOLO, et
le modèle de classification est obtenu par un entraînement selon des algorithmes de classification qui comportent : un réseau neuronal convolutif par région en cascade, Cascade-RCNN, un réseau neuronal convolutif déformable v2, DCNv2, et un réseau efficace, Efficientnet.

2. Procédé selon la revendication 1, dans lequel la génération, sur la base des premières informations de localisation contenues dans les premières informations d'étiquetage comprises dans le premier groupe, des secondes informations de localisation du premier objet détecté correspondant au premier groupe comprend :
la réalisation d'un calcul de valeur moyenne sur les premières informations de localisation contenues dans les premières informations d'étiquetage comprises dans le premier groupe, afin de générer les secondes informations de localisation du premier objet détecté correspondant au premier groupe.

3. Procédé selon la revendication 1 ou 2, dans lequel le regroupement de premières informations d'étiquetage d'une même catégorie dans le premier ensemble d'informations d'étiquetage, afin de générer au moins un premier groupe comprend :
l'obtention d'une intersection sur l'union de boîtes englobantes rectangulaires correspondant à deux éléments quelconques de premières informations d'étiquetage d'une même catégorie dans le premier ensemble d'informations d'étiquetage ; et
le regroupement des premières informations d'étiquetage d'une même catégorie dans le premier ensemble d'informations d'étiquetage sur la base de l'intersection sur l'union de boîtes englobantes rectangulaires, afin de générer l'au moins un premier groupe.

4. Procédé selon l'une quelconque des revendications 1 à 3, dans lequel l'ensemble de modèles de détection est prédéfini.

5. Procédé selon la revendication 1, dans lequel le procédé comprend en outre : l'obtention d'un ensemble de modèles de classification, dans lequel l'ensemble de modèles de classification comprend au moins deux modèles de classification, les au moins deux modèles de classification dans l'ensemble de modèles de classification correspondent à une même catégorie de détection, et les au moins deux modèles de classification comprennent le premier modèle de classification.

6. Appareil (300), comprenant des moyens (301, 302) pour mettre en œuvre le procédé selon l'une quelconque des revendications 1 à 5.

7. Support de stockage informatique, comprenant un programme informatique ou des instructions, dans lequel lorsque le programme informatique ou les instructions est/sont exécutés par un ordinateur, le procédé selon l'une quelconque des revendications 1 à 5 est réalisé.

8. Produit de programme informatique, dans lequel lorsque le produit de programme informatique est exécuté sur un ordinateur, l'ordinateur est activé pour réaliser le procédé selon l'une quelconque des revendications 1 à 5.

9. Système de puce (400), comprenant au moins un processeur (401), dans lequel l'au moins un processeur (401) est couplé à au moins une mémoire (403), et est configuré pour exécuter un programme informatique ou des instructions stockées dans l'au moins une mémoire (403), et lorsque le programme informatique ou les instructions est/sont exécutés, le procédé selon l'une quelconque des revendications 1 à 5 est réalisé.
